# FASCICULE DE BREVET EUROPEEN

(11) **EP 3 041 788 B1**
(45) Date de publication et mention de la délivrance du brevet: **12.06.2019**
(21) Numéro de dépôt: 14752809.5
(22) Date de dépôt: 08.08.2014
(51) Int. Cl.: C01B 3/00, C01B 3/50, C01B 3/56, F17C 11/00, B01D 53/04

(54) **REGENERATION D'UN PIEGE POUR IMPURETES DANS L'HYDROGENE UTILISANT LA CHALEUR EN SORTIE D'UN RESERVOIR A HYDRURES**
REGENERATION EINES FALLE FÜR VERUNREINIGUNGEN IN WASSERSTOFF UNTER VERWENDUNG DER WÄRME AUS EINEM HYDRIDRESERVOIR
REGENERATION OF A TRAP FOR IMPURITIES IN HYDROGEN USING THE HEAT LEAVING A HYDRIDE RESERVOIR

(30) Priorité: 06.09.2013 FR 1358571
(43) Date de publication de la demande: 13.07.2016
(73) Titulaire: Commissariat à l'Énergie Atomique et aux Énergies Alternatives, 75015 Paris (FR)
(72) Inventeur: CHAISE, Albin, F-38000 Grenoble (FR)
(74) Mandataire: Novaimo
(86) Numéro de dépôt international: PCT/EP2014/067085
(87) Numéro de publication internationale: WO 2015/032587

(56) Documents cités:
- EP-A2- 0 315 582
- DE-A1- 10 110 169
- DE-A1-102008 007 557
- FR-A1- 2 411 626
- JP-A- S62 246 699
- US-A- 3 910 831

## Description

### Domaine technique de l'invention

L'invention concerne un procédé de stockage et de déstockage d'hydrogène dans un réservoir à hydrures, comprenant une étape de purification mise en oeuvre au niveau d'au moins un piège filtrant les impuretés contenues dans l'hydrogène entrant dans le réservoir pour son stockage.

L'invention a pour objet également une installation de stockage et de déstockage d'hydrogène comprenant un réservoir à hydrures dans lequel l'hydrogène entre pour son stockage et en sort pour son déstockage et au moins un piège filtrant les impuretés contenus dans l'hydrogène entrant dans le réservoir pour son stockage.

### État de la technique

Le stockage de l'hydrogène est un point très important dans le développement d'une chaîne à vecteur énergétique fondée sur l'hydrogène. Il est primordial de le stocker pour les applications qui nécessitent d'être transportées et il est très intéressant de savoir le stocker pour des applications à énergie primaire intermittente.

Le stockage de l'hydrogène peut se faire sous forme gazeuse, étant comprimé jusqu'à des pressions de 700 bars afin de rendre son volume acceptable, ou sous forme liquide à très basse température (autour d'une vingtaine de degrés Kelvin).

Pour diminuer le volume de stockage d'hydrogène, il est connu d'exploiter la capacité de certains matériaux très poreux de permettre l'accrochage en surface des atomes d'hydrogène. Ce phénomène dit d'adsorption n'est à ce jour significatif qu'à basse température (en dessous de la température de l'azote liquide) et fait encore essentiellement l'objet de recherche fondamentale.

Une autre solution consiste à exploiter la capacité de certains matériaux dits « hydrures » à réaliser une absorption et une désorption de l'hydrogène de manière réversible. Dans les hydrures métalliques (alliage de nickel, de titane, de magnésium) par exemple, les atomes du dihydrogène gazeux entrent dans le matériau et forment une nouvelle phase.

Un des objectifs du stockage est d'obtenir une forte densité volumique d'énergie. Dans le cas de l'hydrogène, il faut faire se rapprocher le plus possible les atomes d'hydrogène. Le stockage dans les hydrures est le moyen le plus efficace pour remplir cet objectif par rapport au stockage en pression et même au stockage sous forme liquide. Ceci se fait par contre au détriment du poids, puisque au bilan il est nécessaire d'ajouter le poids du matériau hydrure dans lequel l'hydrogène s'insère. Les matériaux hydrures se présentent sous forme de poudre, vers laquelle ils évoluent naturellement. Cela comporte deux avantages : d'une part cela permet à l'hydrogène d'accéder au matériau de manière uniforme et d'autre part, la porosité constitue un tampon qui permet d'encaisser le gonflement de matière lorsque l'hydrogène est absorbé.

La réaction d'absorption de l'hydrogène dans le matériau hydrure est exothermique, impliquant donc un dégagement de chaleur. La réaction de désorption qui consiste en la libération de l'hydrogène est quant à elle endothermique, impliquant donc un apport de chaleur nécessaire. En général pour absorber de l'hydrogène à une température donnée, du gaz dihydrogène est injecté à une pression supérieure à la pression d'équilibre de formation de l'hydrure tout en évacuant la chaleur produite. La vitesse de remplissage d'un réservoir à hydrures dépend de l'efficacité de l'échange thermique de refroidissement. Au contraire, pour libérer de l'hydrogène depuis le réservoir à hydrures, il faut se placer en dépression par rapport à la pression d'équilibre de la réaction tout en apportant de la chaleur.

Ce principe de fonctionnement constitue un facteur de sécurité important, puisque l'hydrogène n'est libéré que s'il y a un apport de chaleur. Un second facteur de sécurité est lié au fait que pour certains hydrures, les pressions de palier ne sont pas trop élevées pour des températures raisonnables (la pression d'équilibre se situe par exemple autour de quelques bars).

Parmi les hydrures réversibles qui fonctionnent à plus de 200°C, il est intéressant de citer ceux à base de magnésium suivants : MgH₂, Mg₂Ni, LaNi₄Mn, NaAlH₄. Ils permettent de stocker l'hydrogène de façon réversible. Par exemple dans le cas du magnésium, la réaction réversible est la suivante : Mg+H₂ = MgH₂.

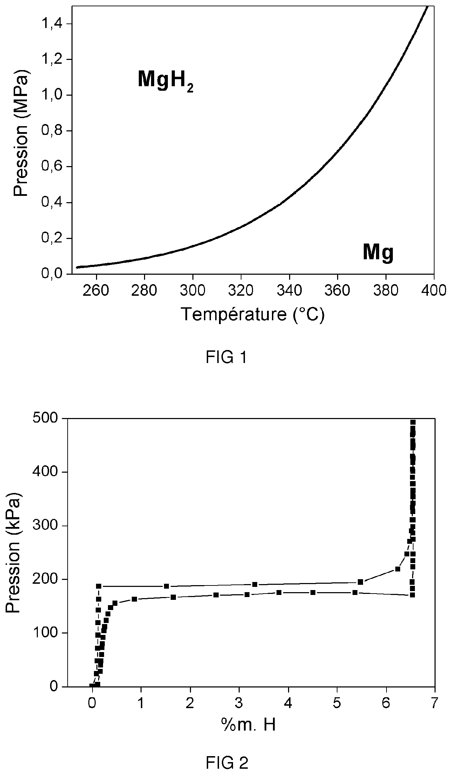

L'hydrogène subit une étape d'absorption par le magnésium selon une réaction exothermique ou une étape de désorption selon une réaction endothermique par l'hydrure de magnésium selon la pression et la température. Typiquement, l'absorption est réalisée à une pression de 10 bars absolus et une température de 380°C et la désorption est réalisée à une pression de 4 bars absolus et une température de 340°C. La courbe de la figure 1 montre les domaines d'existence du composé Mg et du composé MgH₂ en fonction de la pression (exprimée en MPa) et de la température (exprimée en °C).

A une température donnée, le plateau de pression d'équilibre est horizontal pour les composés Mg et MgH₂: la pression d'équilibre ne dépend pas de la composition en hydrogène, comme le montre la courbe de la figure 2 (dont l'abscisse en exprimée en pourcentage massique d'hydrogène et l'ordonnée est la pression exprimée en kPa). Pour les hydrures autres que l'hydrure de magnésium, la pression d'équilibre dépend de la teneur en hydrogène de l'hydrure dans la plupart des cas.

De plus, l'hydrure de magnésium comme la plupart des hydrures est très réactif vis-à-vis de l'eau, de l'oxygène, des composés soufrés, chlorés, du monoxyde de carbone et des hydrocarbures. Ainsi, une faible concentration de ces composés dans l'hydrogène dégrade significativement les performances de stockage des hydrures. Or, par exemple dans une application où l'hydrogène est généré par électrolyse, une quantité importante d'eau et d'oxygène sont présentes dans l'hydrogène à stocker dans le réservoir à hydrures. Il est donc important de protéger le magnésium de ces hydrures, en particulier de l'eau ou de l'oxygène mais également des autres polluants présents par exemple dans l'hydrogène issu du reformage de gaz naturel.

Les hydrures sont utilisés dans des réservoirs qui sont généralement des enceintes à pression. Les réservoirs à hydrures sont souvent équipés d'un système d'échange thermique qui permet de fournir à l'hydrure la chaleur nécessaire à la réaction de désorption de l'hydrogène et d'évacuer la chaleur libérée par l'hydrure lors de la réaction d'absorption de l'hydrogène. Une alternative est de stocker l'énergie de réaction à proximité de l'hydrure dans un matériau à changement de phase.

Depuis quelques années, des réservoirs utilisant l'hydrure de magnésium pour stocker l'hydrogène ont donc été développés. Deux variantes de tels réservoirs sont actuellement fabriquées et vendues : une première variante consiste à entourer les réservoirs avec un système de stockage de la chaleur de réaction qui est isotherme (340°C) puisque il s'agit d'un changement de phase d'un alliage métallique. Une deuxième variante consiste à chauffer et refroidir les réservoirs grâce à une circulation d'huile à proximité de l'hydrure (300 à 380°C).

Comme indiqué précédemment, ce type de stockage de l'hydrogène doit être protégé contre des polluants potentiellement présents dans l'hydrogène à stocker qui pourraient détériorer le fonctionnement du réservoir au niveau des hydrures.

La façon classique de réaliser la purification de l'hydrogène est d'utiliser un piège contenant un matériau capable de fixer par adsorption et de façon réversible les impuretés. Par adsorption, il est entendu qu'une liaison chimique faible (liaison hydrogène, forces de Van Der Waals) permet de lier une molécule gazeuse à la surface d'un matériau poreux. Le matériau peut être sous la forme de poudre ou de granulés (poudre comprimée). Le matériau peut être un tamis moléculaire, une alumine activée ou un gel de silice selon le type d'impuretés à piéger et selon les concentrations en amont et en aval du piège. Parmi les tamis moléculaires, les zéolithes naturelles ou de synthèses sont particulièrement adaptées à la purification de l'hydrogène pour le stockage sur hydrures. Ces matériaux ont la capacité de piéger les impuretés présentes dans l'hydrogène à température voisine de la température ambiante, et de resituer les impuretés lorsque leur température augmente (généralement au-dessus de 200 °C) et lorsque la pression partielle de polluants diminue. On appelle « régénération » le processus consistant à augmenter la température du matériau et à le balayer avec un gaz propre pour évacuer les impuretés précédemment adsorbées par le matériau.

Les impuretés à piéger sont en priorité constituées par l'eau mais peuvent aussi être parmi O₂, CO, CO₂, N₂, SO₂, H₂S, KOH, HCl et des composés organiques. Il existe plusieurs zéolithes dont la structure est adaptée pour adsorber un certain type de polluant.

Pour purifier de petites quantités d'hydrogène, un piège consistant en une cartouche démontable (c'est-à-dire sous la forme d'une petite enceinte de pression contenant un matériau capable de fixer par adsorption et de façon réversible les impuretés) peut être utilisé. Ce type de piège doit être renvoyé chez le fournisseur pour être régénéré, ce qui le rend inapplicable pour des plus grandes quantités d'hydrogène à purifier.

Pour les installations qui nécessitent une grande quantité d'hydrogène, un dispositif de purification avec deux pièges fonctionnant alternativement est très souvent utilisé. Lorsqu'un des pièges est en service, l'autre est régénéré. Ces pièges contiennent également un matériau capable de fixer par adsorption et de façon réversible les impuretés. Cela permet de réaliser la purification continue du flux d'hydrogène. Deux modes de régénération sont couramment utilisés :
- modulation en température : une source d'énergie externe (circulation d'huile ou résistance électrique) est utilisée pour chauffer le matériau et le régénérer, ce qui complique grandement le système et est consommateur d'énergie,
- modulation en pression : la régénération est effectué sans augmentation de température mais en abaissant la pression de gaz autour du matériau, ce qui ne permet pas d'exploiter l'entière capacité du matériau.

Les dispositifs utilisant deux pièges sont encombrants et nécessitent un investissement plus important. Néanmoins d'autres solutions sont possibles pour purifier l'hydrogène en amont d'un réservoir à hydrures, qui offrent la possibilité de minimiser le volume occupé par le dispositif de purification : la purification n'a pas besoin d'être continue puisque le réservoir n'absorbe que pendant une certaine durée. Le piège peut donc n'être dimensionné que pour la capacité de stockage du réservoir d'hydrogène. De plus, le dispositif de purification peut être régénéré à chaque cycle. Cela minimise la masse de matériau à mettre en oeuvre et par conséquent le coût d'une installation.

La solution décrite dans le document FR2411626A1 utilise un reformeur catalytique pour transformer l'oxygène contenu dans l'hydrogène en eau, puis un tamis moléculaire pour piéger l'eau. L'hydrogène absorbé à une pression supérieure à 10,5 bars par le réservoir est donc exempt d'eau et d'oxygène. La phase de régénération du tamis est en revanche problématique car elle repose sur la différence de pression entre l'absorption d'hydrogène et la désorption pour nettoyer le filtre et emporter à la désorption l'eau adsorbée dans le tamis moléculaire. Ce procédé bien connu ne fonctionne pas si la pression d'entrée n'est que légèrement supérieure (ou inférieure) à la pression de sortie du réservoir et il est alors impossible de régénérer le filtre qui se sature en eau et ne protège plus le réservoir à hydrures de l'humidité. De plus, la pression d'absorption doit être supérieure à 10,5 bars. Ces principes ne peuvent pas être appliqués pour les réservoirs à hydrures à base de magnésium, pour lesquels la pression d'absorption de l'hydrogène est généralement inférieure à 10 bars et la pression de sortie peut être de 6 bars.

La solution décrite dans le document US5250368, appliquée aux batteries électriques dégageant de l'hydrogène, propose de piéger l'humidité de l'hydrogène dans un tamis moléculaire et de le chauffer électriquement pour en extraire l'humidité dans une phase de régénération. Cette méthode est efficace mais elle occasionne une perte de rendement puisque de l'énergie électrique doit être prélevée sur la batterie pour réchauffer le tamis moléculaire.

### Objet de l'invention

Le but de la présente invention est de proposer une solution de stockage et de déstockage d'hydrogène dans un réservoir à hydrures qui remédie aux inconvénients listés ci-dessus.

Notamment, un objet de l'invention est de fournir une telle solution qui permette :
- d'être particulièrement adaptée à l'utilisation d'hydrures à base de magnésium mais sans que cela ne soit limitatif,
- une bonne efficacité de purification et de régénération tout en présentant un bon rendement de stockage et de déstockage,
- d'être applicable pour des plus grandes quantités d'hydrogène à purifier,
- une régénération réalisée sur place et éventuellement en continu.

Ces objets peuvent être atteints par un procédé de stockage et de déstockage d'hydrogène dans un réservoir à hydrures, comprenant une étape de purification mise en oeuvre au niveau d'au moins un piège filtrant les impuretés contenues dans l'hydrogène entrant dans le réservoir pour son stockage et une étape de régénération dudit au moins un piège, utilisant la chaleur emportée par l'hydrogène sortant du réservoir après son déstockage.

Préférentiellement, l'étape de régénération est interrompue après un temps prédéfini de mise en oeuvre de la régénération ou lorsque le taux d'humidité du flux d'hydrogène sortant dudit au moins un piège est inférieur à un seuil prédéfini.

Dans un mode préférentiel, le procédé comprend le cycle d'étapes successives suivantes :
- ladite étape de purification,
- une étape d'absorption, par les hydrures du réservoir, de l'hydrogène purifié en sortie dudit au moins un piège,
- une étape de désorption de l'hydrogène par les hydrures du réservoir,
- ladite étape de régénération dans laquelle la chaleur emportée hors du réservoir par l'hydrogène déstocké au moment de l'étape de désorption est utilisée pour chauffer le matériau dudit au moins un piège apte à retenir de façon réversible durant l'étape de purification les impuretés contenues dans l'hydrogène préalablement à ladite absorption.

Préférentiellement, l'étape de régénération comprend une étape d'échange thermique, notamment sans contact, entre tout ou partie du flux d'hydrogène ayant subi ladite désorption et ledit matériau du piège.

L'étape de régénération peut comprendre une étape d'évacuation hors du piège des impuretés préalablement filtrées et retenues par ledit matériau. Notamment, l'étape de régénération peut comprendre :
- une étape de séparation du flux total d'hydrogène ayant subi ladite désorption en des premier et deuxième flux distincts,
- une étape d'utilisation uniquement dudit premier flux pour la mise en oeuvre de ladite étape d'évacuation,
- et une étape d'échange thermique, notamment sans contact, entre uniquement ledit deuxième flux et ledit matériau de sorte que la chaleur générée lors de l'étape de désorption et emportée par ledit deuxième flux est utilisée pour chauffer ledit matériau d'une manière permettant la mise en oeuvre de ladite étape d'évacuation par le premier flux.

Cette étape d'utilisation uniquement dudit premier flux comprend préférentiellement un balayage dudit matériau par ledit premier flux avec un contact direct avec ledit matériau.

Le procédé peut aussi comprendre une étape de rejet dudit premier flux et des impuretés libérées dudit matériau durant ladite étape d'évacuation vers l'atmosphère extérieure, mise en oeuvre après ladite étape d'évacuation, et/ou une étape de refroidissement dudit premier flux et des impuretés libérées dudit matériau durant ladite étape d'évacuation pour condenser l'eau liquide, notamment mise en oeuvre au niveau d'un élément refroidisseur-condenseur, puis une étape de mélange entre ledit premier flux refroidi et ledit deuxième flux.

Préférentiellement, l'étape de régénération comprend :
- une étape de fourniture d'un flux de gaz neutre tel que de l'argon ou de l'azote, en provenance d'une source de gaz neutre,
- une étape d'utilisation dudit flux de gaz neutre pour la mise en oeuvre de ladite étape d'évacuation,
- et une étape d'échange thermique, notamment sans contact, entre le flux total d'hydrogène ayant subi ladite désorption et ledit matériau de sorte que la chaleur générée lors de l'étape de désorption et emportée par ledit flux total est utilisée pour chauffer ledit matériau d'une manière permettant la mise en oeuvre de ladite étape d'évacuation.

Notamment, ladite étape d'utilisation dudit flux de gaz neutre peut comprendre un balayage dudit matériau par ledit flux de gaz neutre avec un contact direct avec ledit matériau et le procédé peut comprendre une étape de rejet dudit flux de gaz neutre et des impuretés libérées dudit matériau durant ladite étape d'évacuation vers l'atmosphère extérieure, mise en oeuvre après ladite étape d'évacuation.

Le cycle d'étapes comprend préférentiellement, après l'étape de régénération, une étape de refroidissement dudit au moins un piège, notamment au niveau dudit matériau, mise en oeuvre avant la mise en oeuvre d'un cycle suivant d'étapes. Notamment, ladite étape de refroidissement dudit au moins un piège peut comprendre les étapes successives suivantes :
- une étape de refroidissement de l'hydrogène sortant du réacteur après l'étape de désorption, mise en oeuvre au niveau d'un élément refroidisseur,
- une étape d'échange thermique, notamment sans contact, entre l'hydrogène ayant subi ladite étape de refroidissement et ledit matériau dudit au moins un piège, de sorte que l'hydrogène prélève de la chaleur audit matériau,
- une étape d'évacuation hors dudit au moins un piège de la chaleur prélevée audit matériau durant ladite étape d'échange thermique, réalisée en évacuant hors dudit au moins un piège l'hydrogène ayant subi ladite étape d'échange thermique.

Ladite étape de purification peut être mise en oeuvre alternativement au niveau de premier et deuxième pièges distincts fonctionnant d'une manière synchronisée telle que l'étape de refroidissement du premier piège est mise en oeuvre durant l'étape de purification mise en oeuvre par le deuxième piège et telle que l'étape de refroidissement du deuxième piège est mise en oeuvre durant l'étape de purification mise en oeuvre par le premier piège.

Une installation de stockage et de déstockage d'hydrogène peut comprendre un réservoir à hydrures dans lequel l'hydrogène entre pour son stockage et en sort pour son déstockage, au moins un piège filtrant les impuretés contenues dans l'hydrogène entrant dans le réservoir pour son stockage et des moyens logiciels et/ou matériels qui mettent en oeuvre un tel procédé, dont un dispositif assurant que la régénération dudit au moins un piège utilise la chaleur emportée par l'hydrogène sortant du réservoir après son déstockage.

Ledit au moins un piège peut notamment comprendre un matériau apte à retenir de façon réversible les impuretés contenues dans l'hydrogène préalablement à son stockage dans le réservoir et en ce que ledit dispositif comprend un élément d'échange thermique assurant un échange thermique, notamment sans contact, entre tout ou partie du flux total d'hydrogène sortant du réservoir et ledit matériau du piège.

Ce dispositif peut comprendre des éléments assurant un balayage dudit matériau par un flux gazeux avec un contact direct avec ledit matériau tel que ledit flux gazeux évacue hors du piège des impuretés préalablement filtrées et retenues par ledit matériau. Notamment, l'installation peut comprendre des éléments assurant que ledit flux gazeux soit constitué par une fraction du flux total d'hydrogène sortant du réservoir.

Le réservoir à hydrures comprend préférentiellement des hydrures à base de magnésium.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 illustre la courbe de pression d'équilibre entre les composés Mg et H₂ et MgH₂ en fonction de la température,
- la figure 2 illustre la courbe de pression d'équilibre à 300°C en fonction de la composition en hydrogène,
- les figures 3 et 4 représentent deux exemples de pièges permettant la mise en oeuvre de l'invention,
- la figure 5 illustre un premier exemple d'installation de stockage et de déstockage d'hydrogène dans un réservoir à hydrures selon l'invention,
- la figure 6 représente l'installation de la figure 5 et la circulation de l'hydrogène entre ses différents composants durant une phase de stockage et de purification de l'hydrogène,
- la figure 7 représente l'installation de la figure 5 et la circulation de l'hydrogène entre ses différents composants durant une phase de déstockage de l'hydrogène et de régénération du piège,
- la figure 8 représente l'installation de la figure 5 et la circulation de l'hydrogène entre ses différents composants durant une phase de déstockage de l'hydrogène et de refroidissement du piège,
- la figure 9 représente un deuxième exemple d'installation de stockage et de déstockage d'hydrogène dans un réservoir à hydrures selon l'invention, durant une phase de déstockage de l'hydrogène et de régénération du piège,
- la figure 10 représente un troisième exemple d'installation de stockage et de déstockage d'hydrogène dans un réservoir à hydrures selon l'invention, avec deux pièges fonctionnant alternativement.

### Description de modes préférentiels de l'invention

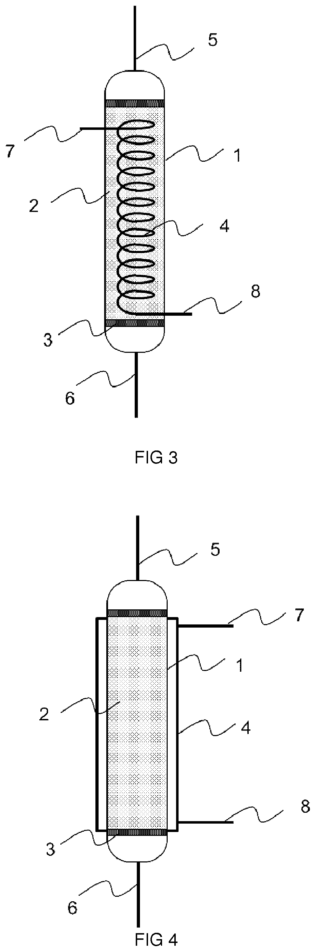

De manière générale et en référence aux figures 3 à 10, l'invention concerne un procédé et une installation de stockage et de déstockage d'hydrogène dans un réservoir à hydrures 10. Le réservoir à hydrures 10 peut notamment comprendre des hydrures à base de magnésium, sans que cela ne soit limitatif du champ d'application.

La solution proposée est particulièrement adaptée aux hydrures fonctionnant à basse pression (1 à 20 bars) et à haute température (entre 200 et 400°C). Ces hydrures doivent, par leur nature, être portés à haute température pour pouvoir libérer l'hydrogène stocké. L'hydrogène sort alors chaud du réservoir. Cela peut concerner le domaine du stockage de l'hydrogène pour l'alimentation de piles à combustible, de turbines à hydrogène, moteurs thermiques ou industrie utilisant l'hydrogène.

Le procédé comprend une étape de purification mise en oeuvre au niveau d'au moins un piège filtrant les impuretés contenues dans l'hydrogène entrant dans le réservoir 10 pour son stockage et une étape de régénération dudit au moins un piège, utilisant la chaleur emportée par l'hydrogène sortant du réservoir 10 après son déstockage.

Les impuretés sont en priorité constituées par l'eau mais peuvent aussi être parmi O₂, CO, CO₂, N₂, SO₂, H₂S, KOH, HCl et des composés organiques.

Ainsi, le principe général consiste à utiliser la chaleur emportée par l'hydrogène lors de la désorption du réservoir à hydrures 10 pour régénérer un matériau contenu dans le piège et capable de retenir de façon réversible des impuretés, cette régénération consistant à extraire hors du matériau les impuretés précédemment adsorbé durant la phase de stockage de l'hydrogène.

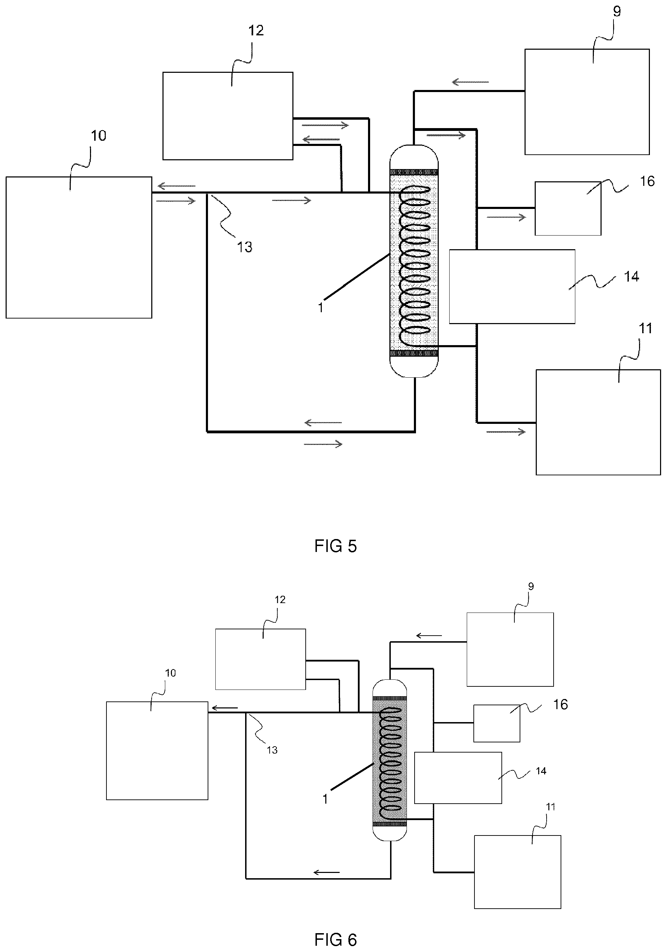

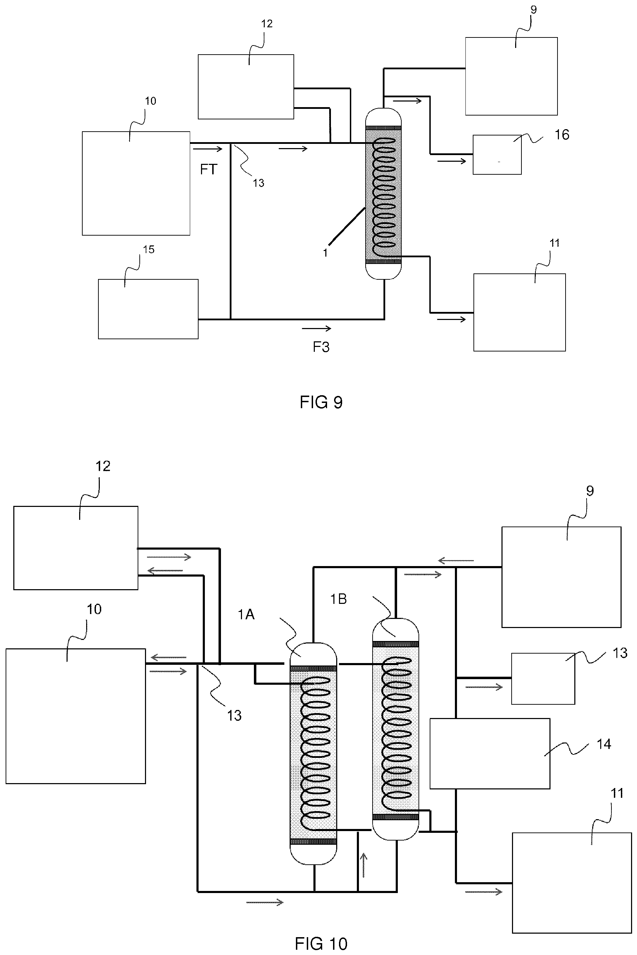

En référence à la figure 5, l'installation de stockage et de déstockage d'hydrogène comprend un réservoir à hydrures 10 dans lequel l'hydrogène entre pour son stockage et en sort pour son déstockage, au moins un piège 1 filtrant les impuretés contenues dans l'hydrogène entrant dans le réservoir 10 pour son stockage et des moyens logiciels et/ou matériels qui mettent en oeuvre le procédé qui sera détaillé plus loin, dont un dispositif assurant que la régénération dudit au moins un piège 1 utilise la chaleur emportée par l'hydrogène sortant du réservoir 10 après son déstockage. Notamment, l'installation peut comprendre à cet effet au moins l'un des pièges 1 des figures 3 et 4 : chaque piège 1 des figures 3 et 4 est agencé de sorte à filtrer les impuretés contenues dans l'hydrogène à stocker dans le réservoir 10 et permet de faire en sorte que sa régénération utilise la chaleur emportée par l'hydrogène sortant du réservoir 10 après son déstockage. En référence à la figure 10 et comme il le sera détaillé plus loin, l'installation peut comprendre deux tels pièges 1 agencés et pilotés de sorte à fonctionner alternativement.

Pour des raisons de clarté, des éléments ayant des fonctions identiques sur les figures 3 et 4 en dépit de structures différentes sont nommés par des références identiques.

En référence aux figures 3 et 4, ledit au moins un piège 1 comprend un matériau 2 apte à retenir de façon réversible les impuretés contenues dans l'hydrogène préalablement à son stockage dans le réservoir 10. Le piège comprend un élément d'échange thermique 4 assurant un échange thermique, notamment sans contact, entre tout ou partie du flux total d'hydrogène sortant du réservoir 10 et le matériau 2 du piège 1.

De manière générale, le dispositif qui assure que la régénération dudit au moins un piège 1 utilise la chaleur emportée par l'hydrogène sortant du réservoir 10 après son déstockage comprend des éléments assurant un balayage du matériau 2 par un flux gazeux avec un contact direct avec le matériau 2 tel que ce flux gazeux évacue hors du piège 1 des impuretés préalablement filtrées et retenues par le matériau 2.

Comme détaillé plus tard, l'installation peut comprendre des éléments assurant que ce flux gazeux soit constitué par une fraction du flux total d'hydrogène sortant du réservoir 10 ou bien par un flux de gaz neutre.

Toujours en référence aux figures 3 et 4, chaque piège 1 est une enceinte soumise à la pression interne. Cette enceinte est remplie du matériau 2, qui est notamment sous forme granulaire. La quantité de matériau 2 présente dans le piège 1 est de préférence comprise entre une fois et cinq fois la quantité minimale nécessaire à la purification de la masse de dihydrogène que peut contenir au maximum le réservoir à hydrures 10.

Le piège 1 est préférentiellement placé sensiblement verticalement. Il comporte les piquages de gaz 5 et 6 respectivement aux extrémités haute et basse permettant à l'hydrogène de diffuser dans le piège 1 au contact du matériau 2.

Le piège 1 comporte un filtre 3 à chaque extrémité qui empêche le matériau 2 de sortir du piège 1, mais autorise le passage de l'hydrogène vers les piquages 5 et 6.

L'échangeur thermique 4 est disposé à l'intérieur ou autour du piège 1 de sorte que de l'hydrogène circulant dans l'échangeur thermique 4 puisse réchauffer voire refroidir le matériau 2. Cet échangeur thermique 4 peut être par exemple une chemise autour du piège 1, un serpentin dans ou autour du piège 1, un faisceau de tubes traversant le matériau 2, ou un tube équipé d'ailettes à l'intérieur du piège 1. Il présente une entrée 7 du côté haut du piège 1 et une sortie 8 du côté bas.

Le piège 1 est relié par le haut au niveau du piquage 5 à la source d'alimentation 9 en hydrogène pollué et par le bas au niveau du piquage 6 au réservoir 10. Ainsi, lors du stockage de l'hydrogène dans le réservoir, le flux de gaz ne peut pas fluidiser le matériau 2. Une fluidisation du matériau 2 diminuerait l'efficacité en diminuant le contact entre le matériau 2 et le gaz qui le balaie.

Préférentiellement, l'étape de régénération dudit au moins un piège 1 est interrompue après un temps prédéfini de mise en oeuvre de la régénération ou lorsque le taux d'humidité du flux d'hydrogène sortant dudit au moins un piège 1 est inférieur à un seuil prédéfini. Par exemple, on peut arrêter la régénération lorsque le point de rosé du gaz qui sort du piège est inférieur à la température ambiante. Mais on peut choisir de poursuivre la régénération jusqu'à un point de rosée plus faible. Cela dépend de la qualité du gaz désirée lors de la phase de purification-stockage : plus on régénère en profondeur et plus le piège pourra générer un gaz pur.

De préférence, le procédé peut comprendre le cycle d'étapes successives suivantes :
- l'étape de purification évoquée ci-dessus,
- une étape d'absorption, par les hydrures du réservoir 10, de l'hydrogène purifié en sortie dudit au moins un piège 1,
- une étape de désorption de l'hydrogène par les hydrures du réservoir 10,
- l'étape de régénération évoquée ci-dessus, dans laquelle la chaleur emportée hors du réservoir par l'hydrogène déstocké au moment de l'étape de désorption est utilisée pour chauffer le matériau 2 dudit au moins un piège 1 apte à retenir de façon réversible durant l'étape de purification les impuretés contenues dans l'hydrogène préalablement à ladite absorption.

La figure 6 représente l'installation de la figure 5 et la circulation de l'hydrogène entre ses différents composants durant une phase de stockage et de purification de l'hydrogène.

Durant la phase de stockage de l'hydrogène et l'étape d'absorption de l'hydrogène par les hydrures du réservoir 10, le flux d'hydrogène provient de la source d'alimentation 9 en hydrogène. La température de l'hydrogène est proche de l'ambiante (par exemple inférieure ou égale à 50°C). L'hydrogène est amené vers le haut du piège 1 via le piquage 5 et traverse le matériau 2. L'hydrogène purifié par le matériau 2 ainsi balayé et traversé sort du piège 1 au niveau du piquage 6 pour être conduit vers le réservoir d'hydrures 10 dans lequel il sera stocké par absorption dans un hydrure.

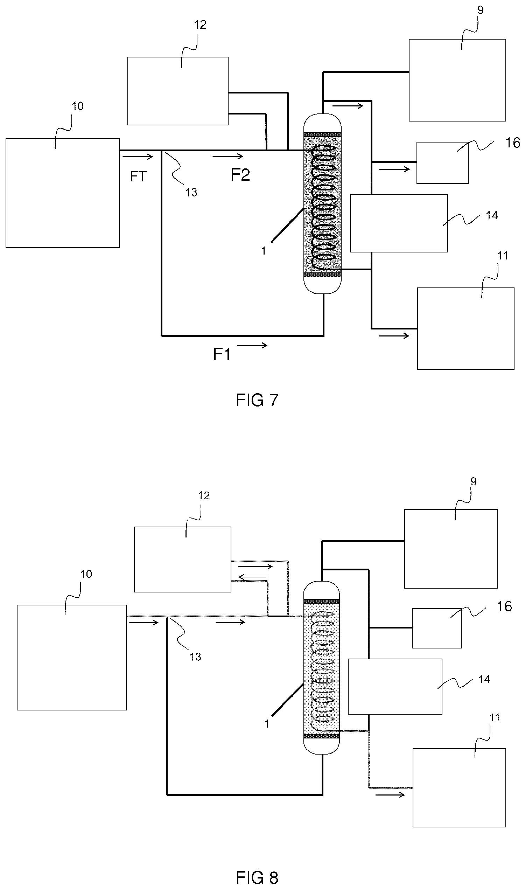

Par ailleurs, l'étape de régénération comprend une étape d'échange thermique (figures 7 et 9), notamment sans contact, mise en oeuvre au niveau de l'échangeur thermique 4, entre tout ou partie du flux d'hydrogène ayant subi la désorption et le matériau 2 du piège 1. C'est l'une des raisons de l'existence de l'échangeur thermique 4, qu'il soit disposé en serpentin à l'intérieur du piège 1 comme sur la figure 3 ou à l'extérieur du piège 1 comme sur la figure 4. Comme il le sera détaillé plus loin, l'échangeur thermique 4 pourra également être utilisé dans le cadre d'un refroidissement ultérieur dudit au moins un piège 1, en référence à la figure 8.

L'échangeur thermique 4 est relié à la sortie du réservoir à hydrures 10 par son piquage 7 disposé dans la partie haute du piège 1 et est relié à un dispositif utilisateur 11 de l'hydrogène déstocké par son piquage 8 dans la partie basse du piège 1.

Grâce à cette montée en température du matériau 2 via l'échangeur thermique 4 dans lequel circule de l'hydrogène sortant du réservoir 10, les impuretés contenues dans le matériau peuvent être évacuées du matériau : l'étape de régénération comprend une étape d'évacuation hors du piège 1 des impuretés préalablement filtrées et retenues par le matériau 2.

Dans une première variante en référence à la figure 7 durant une phase de déstockage de l'hydrogène et de régénération du piège 1, l'étape de régénération comprend pour y parvenir :
- une étape de séparation, au niveau d'un élément séparateur 13 par exemple sous la forme d'un Té, du flux total FT d'hydrogène ayant subi la désorption en un premier flux F1 et en un deuxième flux F2 distincts l'un de l'autre,
- une étape d'utilisation uniquement du premier flux F1 pour la mise en oeuvre de l'étape d'évacuation des impuretés hors du piège 1,
- et une étape d'échange thermique, notamment sans contact, entre uniquement le deuxième flux F2 et le matériau 2 de sorte que la chaleur générée lors de l'étape de désorption et emportée par le deuxième flux F2 est utilisée pour chauffer le matériau 2 d'une manière permettant la mise en oeuvre de l'étape d'évacuation des impuretés hors du piège 1 par le premier flux F1.

L'élément de séparation sous la forme en Té a alors une première entrée/sortie en communication fluidique avec le réservoir 10, une deuxième entrée/sortie en communication fluidique avec le piquage 6 du piège 1 et une troisième entrée/sortie en communication fluidique avec le piquage 7.

De préférence, cette étape d'utilisation uniquement du premier flux F1 pour évacuer les impuretés hors du piège comprend la mise en oeuvre d'un balayage du matériau 2 par le premier flux F1 avec un contact direct avec le matériau 2.

Une mise en oeuvre de ces principes peut être la suivante. Durant la phase de déstockage de l'hydrogène au niveau du réservoir 10 par désorption de cet hydrogène par les hydrures, le flux total FT d'hydrogène est libéré par le réservoir 10 à une température comprise entre 200 et 400°C. Ce flux FT est divisé au niveau de l'élément de séparation 13 en le deuxième flux F2 qui va s'écouler à travers l'échangeur thermique 4 et en le premier flux F1 qui va traverser le piège 1 pour être en contact avec le matériau 2. Un intérêt de diviser les flux F1 et F2 est d'éviter des vitesses de gaz excessives dans le piège 1 qui pourraient fluidiser le matériau 2 ou/et créer des pertes de charges importantes de part et d'autre du piège 1.

Le deuxième flux F2 constitue préférentiellement entre 50% et 100% du flux total FT d'hydrogène et est dirigé dans l'échangeur thermique 4 de façon à ce que la chaleur de l'hydrogène soit transférée au matériau 2 sans entrer en contact direct avec ce matériau 2. Ce flux F2 d'hydrogène chauffe le piège 1 et le matériau 2 à une température comprise entre 200 et 400°C, ce qui permet au matériau 2 de libérer les impuretés, en particulier l'humidité adsorbée. Le flux F2 d'hydrogène chaud entre par le haut dans l'échangeur 4 au niveau du piquage 7 afin de privilégier la zone du piège 1 qui a été le plus polluée au cours de la phase précédente. Ce dernier point permet de réaliser une régénération sur des cycles partiels de remplissage du réservoir à hydrures 10 : si ce réservoir est cyclé partiellement, seul le matériau 2 situé dans la partie supérieure du piège 1 sera saturé en eau. Cette zone doit être régénérée en priorité. Le flux F2 d'hydrogène sort ensuite de l'échangeur 4 par le piquage 8 pour être conduit au dispositif utilisateur 11. Cet hydrogène est sec. Il peut éventuellement être refroidi avant d'être utilisé.

Préférentiellement, le procédé comprend dans une première variante une étape de rejet du premier flux F1 et des impuretés libérées du matériau 2 durant l'étape d'évacuation vers l'atmosphère extérieure 16, mise en oeuvre après l'étape d'évacuation.

Toutefois, dans une deuxième variante très avantageuse, le procédé peut comprendre, alternativement ou en combinaison avec l'étape de rejet, une étape de refroidissement du premier flux F1 et des impuretés libérées du matériau 2 durant l'étape d'évacuation pour condenser l'eau liquide, notamment mise en oeuvre au niveau d'un élément refroidisseur-condenseur 14, puis une étape de mélange entre le premier flux refroidi et le deuxième flux F2.

Une manière de mettre en oeuvre le procédé précédemment décrit est de prévoir que le premier flux F1 soit constitué par une proportion comprise entre 0 et 50% du flux total FT d'hydrogène qui sort du réservoir à hydrures 10. Le premier flux F1 constitue un flux d'hydrogène porteur car il est porteur des impuretés en vue de leur évacuation hors du matériau 2. Il entre dans le piège 1 par le piquage 6 afin de réaliser un balayage du matériau 2 et évacuer les polluants hors du piège 1. Le balayage du matériau 2 par le premier flux F1 s'effectue du bas vers le haut, c'est-à-dire depuis la zone de matériau 2 ayant la moins forte concentration en polluants, notamment contenant le moins d'humidité, vers la zone du matériau 2 ayant la plus forte concentration en polluants, notamment contenant le plus d'humidité. L'hydrogène porteur sort ensuite du piège 1 par le piquage 5. Cet hydrogène porteur peut être rejeté vers l'atmosphère extérieure 16 avec l'eau qu'il contient ou bien être refroidi à température ambiante via l'élément refroidisseur-condenseur 14 pour condenser l'eau liquide avant d'être mélangé au flux F2 d'hydrogène. Cette deuxième solution peut de préférence être mise en oeuvre si le dispositif utilisateur 11 tolère l'hydrogène humide (par exemple une pile à combustible).

Dans une deuxième variante en référence à la figure 9 durant une phase de déstockage de l'hydrogène et de régénération du piège 1, l'étape de régénération comprend :
- une étape de fourniture d'un flux F3 de gaz neutre tel que de l'argon ou de l'azote, en provenance d'une source de gaz neutre 15,
- une étape d'utilisation du flux F3 de gaz neutre pour la mise en oeuvre de l'étape d'évacuation des impuretés hors du piège 1,
- et une étape d'échange thermique, notamment sans contact et mise en oeuvre au niveau de l'échangeur thermique 4, entre le flux total FT d'hydrogène ayant subi la désorption et le matériau 2 de sorte que la chaleur générée lors de l'étape de désorption et emportée par le flux total FT est utilisée pour chauffer le matériau 2 d'une manière permettant la mise en oeuvre de l'étape d'évacuation.

Ledit gaz neutre est préférentiellement sec : le niveau de pureté du gaz de balayage conditionne notamment la profondeur de la régénération. Le taux d'H₂O dans le gaz neutre est préférentiellement inférieur à 1000 ppm.

Préférentiellement, l'étape d'utilisation du flux F3 de gaz neutre comprend la mise en oeuvre d'un balayage du matériau 2 par le flux F3 de gaz neutre avec un contact direct avec le matériau 2 et le procédé comprend une étape de rejet du flux F3 de gaz neutre et des impuretés libérées depuis le matériau 2 durant l'étape d'évacuation vers l'atmosphère extérieure 16, cette étape de rejet étant mise en oeuvre après l'étape d'évacuation évoquée précédemment. Dans ce cas, l'hydrogène déstocké est pur et disponible en intégralité pour le dispositif utilisateur 11.

En référence à la figure 8 durant une phase de déstockage de l'hydrogène et de refroidissement du piège 1, le cycle d'étapes comprend, après l'étape de régénération du piège 1 grâce à la chaleur récupérée depuis l'hydrogène déstocké, une étape de refroidissement dudit au moins un piège 1, notamment au niveau du matériau 2, mise en oeuvre au niveau de l'échangeur thermique 4 avant la mise en oeuvre d'un cycle suivant d'étapes. Cette étape de refroidissement dudit au moins un piège comprend les étapes successives suivantes :
- une étape de refroidissement de l'hydrogène sortant du réacteur 10 après l'étape de désorption, mise en oeuvre au niveau d'un élément refroidisseur 12,
- une étape d'échange thermique, notamment sans contact et mise en oeuvre au niveau de l'échangeur thermique 4, entre l'hydrogène ayant subi cette étape de refroidissement et le matériau 2 dudit au moins un piège 1, de sorte que l'hydrogène prélève de la chaleur au matériau 2,
- une étape d'évacuation hors dudit au moins un piège 1 de la chaleur prélevée au matériau 2 durant cette étape d'échange thermique, réalisée en évacuant hors dudit au moins un piège 1 l'hydrogène ayant subi cette étape d'échange thermique.

Cela permet au piège 1 d'être refroidi pour pouvoir de nouveau être efficace lors d'une absorption suivante d'hydrogène par les hydrures. Le flux total FT d'hydrogène sortant du réacteur 10 passe par l'élément refroidisseur 12 avant de passer dans l'échangeur thermique 4 afin de prélever la chaleur du matériau 2.

En référence maintenant à la figure 10, l'étape de purification mise en oeuvre pour filtrer les impuretés contenues dans l'hydrogène entrant dans le réservoir 10 pour son stockage est mise en oeuvre alternativement au niveau d'un premier piège 1A et d'un deuxième piège 1B distincts l'un de l'autre et fonctionnant d'une manière synchronisée telle que l'étape de refroidissement du premier piège 1A est mise en oeuvre durant l'étape de purification mise en oeuvre par le deuxième piège 1B et telle que l'étape de refroidissement du deuxième piège 1B est mise en oeuvre durant l'étape de purification mise en oeuvre par le premier piège 1A.

En effet, il peut être envisagé de placer les deux pièges 1A, 1B en parallèle et fonctionnant alternativement. L'hydrogène purifié à température ambiante par un des pièges peut être dirigé vers l'échangeur thermique 4 de l'autre piège afin de le refroidir. Il est également possible d'utiliser un autre système de refroidissement indépendant de l'échangeur thermique 4 pour réaliser le refroidissement du piège qui vient d'être régénéré.

Une manière de mettre en oeuvre cette dernière variante est de prévoir les étapes suivantes :
- lors de la phase de déstockage, l'hydrogène sort chaud du réservoir à hydrures 10 et traverse le piège 1A ; le piège 1A monte en température et subit ainsi une régénération ; le piège 1B n'est pas actif à ce moment-là ou bien il continue d'être refroidi par une source externe de froid,
- lors de la phase de stockage suivante, l'hydrogène humide passe à travers le piège 1B : son taux d'humidité diminue, le gaz est purifié avant d'être stocké dans le réservoir 10 ; durant cette phase, le piège 1A est refroidi soit par l'hydrogène purifié par le piège 1B, soit par une source externe de froid,
- lors de la phase de déstockage du réservoir 10 suivante, l'hydrogène sort chaud du réservoir 10 et traverse le piège 1B ; le piège 1B subit ainsi une régénération ; le piège 1A n'est pas actif à ce moment-là ou bien il continue d'être refroidi par une source externe de froid,
- lors de la phase de stockage suivante, l'hydrogène passe à travers le piège A : son taux d'humidité diminue, le gaz est purifié avant d'être stocké dans le réservoir 10 : durant cette phase, le piège 1B est refroidi soit par l'hydrogène purifié par le piège 1A, soit par une source externe de froid.

Ce fonctionnement alternatif en référence à la figure 10 permet de purifier l'hydrogène en entrée de réservoir 10 dans le cas où le temps de refroidissement des pièges 1A, 1B est du même ordre de grandeur que la durée de stockage du réservoir 10. Ces dispositions sont utiles en particulier lorsque le temps de cycle du réservoir 10 est court (inférieur à quelques heures) et ne permettrait pas le refroidissement complet d'un seul piège.

## Revendications

1. Procédé de stockage et de déstockage d'hydrogène dans un réservoir à hydrures (10), comprenant une étape de purification mise en oeuvre au niveau d'au moins un piège (1, 1A, 1B) filtrant les impuretés contenues dans l'hydrogène entrant dans le réservoir pour son stockage **caractérisé en ce qu'**il comprend une étape de régénération dudit au moins un piège, utilisant la chaleur emportée par l'hydrogène sortant du réservoir après son déstockage.

2. Procédé selon la revendication 1, **caractérisé en ce que** l'étape de régénération est interrompue après un temps prédéfini de mise en oeuvre de la régénération ou lorsque le taux d'humidité du flux d'hydrogène sortant dudit au moins un piège est inférieur à un seuil prédéfini.

3. Procédé selon l'une des revendications 1 ou 2, **caractérisé en ce qu'**il comprend le cycle d'étapes successives suivantes :
- ladite étape de purification,
- une étape d'absorption, par les hydrures du réservoir, de l'hydrogène purifié en sortie dudit au moins un piège,
- une étape de désorption de l'hydrogène par les hydrures du réservoir,
- ladite étape de régénération dans laquelle la chaleur emportée hors du réservoir par l'hydrogène déstocké au moment de l'étape de désorption est utilisée pour chauffer le matériau (2) dudit au moins un piège (1) apte à retenir de façon réversible durant l'étape de purification les impuretés contenues dans l'hydrogène préalablement à ladite absorption.

4. Procédé selon la revendication 3, **caractérisé en ce que** l'étape de régénération comprend une étape d'échange thermique (4), notamment sans contact, entre tout ou partie du flux d'hydrogène ayant subi ladite désorption et ledit matériau du piège.

5. Procédé selon l'une des revendications 3 ou 4, **caractérisé en ce que** l'étape de régénération comprend une étape d'évacuation hors du piège des impuretés préalablement filtrées et retenues par ledit matériau.

6. Procédé selon la revendication 5, **caractérisé en ce que** l'étape de régénération comprend :
- une étape de séparation (13) du flux total (FT) d'hydrogène ayant subi ladite désorption en des premier et deuxième flux (F1, F2) distincts,
- une étape d'utilisation uniquement dudit premier flux (F1) pour la mise en oeuvre de ladite étape d'évacuation,
- et une étape d'échange thermique, notamment sans contact, entre uniquement ledit deuxième flux (F2) et ledit matériau de sorte que la chaleur générée lors de l'étape de désorption et emportée par ledit deuxième flux est utilisée pour chauffer ledit matériau d'une manière permettant la mise en oeuvre de ladite étape d'évacuation par le premier flux.

7. Procédé selon la revendication 6, **caractérisé en ce que** ladite étape d'utilisation uniquement dudit premier flux comprend un balayage dudit matériau par ledit premier flux avec un contact direct avec ledit matériau.

8. Procédé selon l'une des revendications 6 ou 7, **caractérisé en ce qu'**il comprend une étape de rejet dudit premier flux et des impuretés libérées dudit matériau durant ladite étape d'évacuation vers l'atmosphère extérieure (16), mise en oeuvre après ladite étape d'évacuation et/ou **en ce qu'**il comprend une étape de refroidissement dudit premier flux et des impuretés libérées dudit matériau durant ladite étape d'évacuation pour condenser l'eau liquide, notamment mise en oeuvre au niveau d'un élément refroidisseur-condenseur (14), puis une étape de mélange entre ledit premier flux refroidi et ledit deuxième flux.

9. Procédé selon la revendication 5, **caractérisé en ce que** l'étape de régénération comprend :
- une étape de fourniture d'un flux (F3) de gaz neutre tel que de l'argon ou de l'azote, en provenance d'une source de gaz neutre (15),
- une étape d'utilisation dudit flux de gaz neutre pour la mise en oeuvre de ladite étape d'évacuation,
- et une étape d'échange thermique, notamment sans contact, entre le flux total d'hydrogène ayant subi ladite désorption et ledit matériau de sorte que la chaleur générée lors de l'étape de désorption et emportée par ledit flux total est utilisée pour chauffer ledit matériau d'une manière permettant la mise en oeuvre de ladite étape d'évacuation.

10. Procédé selon la revendication 9, **caractérisé en ce que** ladite étape d'utilisation dudit flux de gaz neutre comprend un balayage dudit matériau par ledit flux de gaz neutre avec un contact direct avec ledit matériau et **en ce qu'**il comprend une étape de rejet dudit flux de gaz neutre et des impuretés libérées dudit matériau durant ladite étape d'évacuation vers l'atmosphère extérieure (16), mise en oeuvre après ladite étape d'évacuation.

11. Procédé selon l'une des revendications 3 à 10, **caractérisé en ce que** le cycle d'étapes comprend, après l'étape de régénération, une étape de refroidissement dudit au moins un piège, notamment au niveau dudit matériau, mise en oeuvre avant la mise en oeuvre d'un cycle suivant d'étapes.

12. Procédé selon la revendication 11, **caractérisé en ce que** ladite étape de refroidissement dudit au moins un piège comprend les étapes successives suivantes :
- une étape de refroidissement de l'hydrogène sortant du réacteur après l'étape de désorption, mise en oeuvre au niveau d'un élément refroidisseur (12),
- une étape d'échange thermique, notamment sans contact, entre l'hydrogène ayant subi ladite étape de refroidissement et ledit matériau dudit au moins un piège, de sorte que l'hydrogène prélève de la chaleur audit matériau,
- une étape d'évacuation hors dudit au moins un piège de la chaleur prélevée audit matériau durant ladite étape d'échange thermique, réalisée en évacuant hors dudit au moins un piège l'hydrogène ayant subi ladite étape d'échange thermique.

13. Procédé selon l'une des revendications 11 ou 12, **caractérisé en ce que** ladite étape de purification est mise en oeuvre alternativement au niveau de premier et deuxième pièges (1A, 1B) distincts fonctionnant d'une manière synchronisée telle que l'étape de refroidissement du premier piège (1A) est mise en oeuvre durant l'étape de purification mise en oeuvre par le deuxième piège (1B) et telle que l'étape de refroidissement du deuxième piège (1B) est mise en oeuvre durant l'étape de purification mise en oeuvre par le premier piège (1A).

14. Installation de stockage et de déstockage d'hydrogène comprenant un réservoir à hydrures (10), le réservoir à hydrures (10) comprenant de préférence des hydrures à base de magnésium, réservoir à hydrures dans lequel l'hydrogène entre pour son stockage et en sort pour son déstockage, au moins un piège (1, 1A, 1B) filtrant les impuretés contenues dans l'hydrogène entrant dans le réservoir pour son stockage et des moyens logiciels et/ou matériels qui mettent en oeuvre un procédé selon l'une quelconque des revendications précédentes, dont un dispositif assurant que la régénération dudit au moins un piège utilise la chaleur emportée par l'hydrogène sortant du réservoir après son déstockage.

15. Installation selon la revendication 14, **caractérisée en ce que** ledit au moins un piège comprend un matériau (2) apte à retenir de façon réversible les impuretés contenues dans l'hydrogène préalablement à son stockage dans le réservoir et **en ce que** ledit dispositif comprend un élément d'échange thermique (4) assurant un échange thermique, notamment sans contact, entre tout ou partie du flux total (FT) d'hydrogène sortant du réservoir et ledit matériau du piège.

16. Installation selon la revendication 15, **caractérisée en ce que** ledit dispositif comprend des éléments (3, 5, 6) assurant un balayage dudit matériau par un flux gazeux avec un contact direct avec ledit matériau tel que ledit flux gazeux évacue hors du piège des impuretés préalablement filtrées et retenues par ledit matériau, l'installation comprenant de préférence des éléments (13) assurant que ledit flux gazeux soit constitué par une fraction (F1) du flux total (FT) d'hydrogène sortant du réservoir.

## Patentansprüche

1. Verfahren zum Speichern und Ausspeichern von Wasserstoff in einem Hydridbehälter (10), umfassend einen Reinigungsschritt, der an mindestens einer Falle (1, 1A, 1B) ausgeführt wird, welche die Verunreinigungen filtert, die in dem in den Behälter eintretenden Wasserstoff enthalten sind, **dadurch gekennzeichnet, dass** es einen Schritt der Regeneration der mindestens einen Falle umfasst, der die Wärme nutzt, die von dem nach seiner Ausspeicherung aus dem Behälter austretenden Wasserstoff mitgeführt wird.

2. Verfahren nach Anspruch 1, **dadurch gekennzeichnet, dass** der Regenerationsschritt nach einer vorgegebenen Ausführungszeit der Regeneration, oder wenn der Feuchtigkeitsgehalt des aus der mindestens einen Falle austretenden Wasserstoffstroms unter einem vorgegebenen Schwellenwert liegt, abgebrochen wird.

3. Verfahren nach einem der Ansprüche 1 oder 2, **dadurch gekennzeichnet, dass** es den Zyklus folgender aufeinander folgender Schritte umfasst:
- den Reinigungsschritt,
- einen Schritt der Absorption des aus der mindestens einen Falle austretenden gereinigten Wasserstoffs durch die Hydride des Behälters,
- einen Schritt der Desorption des Wasserstoffs durch die Hydride des Behälters,
- den Regenerationsschritt, bei dem die Wärme, die von dem zum Zeitpunkt des Desorptionsschritts aus dem Behälter ausgespeicherten Wasserstoff mitgeführt wird, dazu genutzt wird, das Material (2) der mindestens einen Falle (1) zu erwärmen, das geeignet ist, während des Reinigungsschritts die im Wasserstoff enthaltenen Verunreinigungen vor der Absorption reversibel zurückzuhalten.

4. Verfahren nach Anspruch 3, **dadurch gekennzeichnet, dass** der Regenerationsschritt einen Schritt des Wärmeaustausches (4), insbesondere kontaktlos, zwischen dem gesamten oder einem Teil des Wasserstoffstroms, welcher der Desorption unterzogen wurde, und dem Material der Falle umfasst.

5. Verfahren nach einem der Ansprüche 3 oder 4, **dadurch gekennzeichnet, dass** der Regenerationsschritt einen Schritt des Austragens der zuvor gefilterten und vom Material zurückgehaltenen Verunreinigungen aus der Falle umfasst.

6. Verfahren nach Anspruch 5, **dadurch gekennzeichnet, dass** der Regenerationsschritt umfasst:
- einen Schritt der Trennung (13) des Wasserstoffgesamtstroms (FT), welcher der Desorption unterzogen wurde, in getrennte erste und zweite Ströme (F1, F2),
- einen Schritt der Nutzung nur des ersten Stroms (F1) zum Ausführen des Austragschritts,
- einen Schritt des Wärmeaustausches, insbesondere kontaktlos, zwischen nur dem zweiten Strom (F2) und dem Material, so dass die beim Desorptionsschritt erzeugte und von dem zweiten Strom mitgeführte Wärme dazu genutzt wird, das Material auf eine Weise zu erwärmen, die das Ausführen des Austragschritts durch den ersten Strom ermöglicht.

7. Verfahren nach Anspruch 6, **dadurch gekennzeichnet, dass** der Schritt der Nutzung nur des ersten Stroms ein Spülen des Materials durch den ersten Strom mit einem direkten Kontakt mit dem Material umfasst.

8. Verfahren nach einem der Ansprüche 6 oder 7, **dadurch gekennzeichnet, dass** es einen Schritt der Einleitung des ersten Stroms und der aus dem Material während des Austragschritts freigesetzten Verunreinigungen zur Außenatmosphäre (16) umfasst, der nach dem Austragschritt ausgeführt wird, und/oder dass es einen Schritt der Kühlung des ersten Stroms und der aus dem Material während des Austragschritts freigesetzten Verunreinigungen umfasst, um das flüssige Wasser zu kondensieren, der insbesondere an einem Kühl-/Kondensatorelement (14) ausgeführt wird, dann einen Schritt des Mischens zwischen dem ersten gekühlten Strom und dem zweiten Strom.

9. Verfahren nach Anspruch 5, **dadurch gekennzeichnet, dass** der Regenerationsschritt umfasst:
- einen Schritt der Lieferung eines Stroms (F3) von Neutralgas wie Argon oder Stickstoff aus einer Neutralgasquelle (15),
- einen Schritt der Nutzung des Neutralgasstroms zum Ausführen des Austragschritts,
- einen Schritt des Wärmeaustausches, insbesondere kontaktlos, zwischen dem Wasserstoffgesamtstrom, welcher der Desorption unterzogen wurde, und dem Material, so dass die beim Desorptionsschritt erzeugte und vom Gesamtstrom mitgeführte Wärme dazu genutzt wird, das Material auf eine Weise zu erwärmen, die das Ausführen des Austragschritts ermöglicht.

10. Verfahren nach Anspruch 9, **dadurch gekennzeichnet, dass** der Schritt der Nutzung des Neutralgasstroms ein Spülen des Materials durch den Neutralgasstrom mit einem direkten Kontakt mit dem Material umfasst und dass es einen Schritt des Einleitens des Neutralgasstroms und der Verunreinigungen, die während des Austragschritts aus dem Material freigesetzt wurden, zur Außenatmosphäre (16) umfasst, der nach dem Austragschritt ausgeführt wird.

11. Verfahren nach einem der Ansprüche 3 bis 10, **dadurch gekennzeichnet, dass** der Schrittzyklus nach dem Regenerationsschritt einen Schritt der Kühlung der mindestens einen Falle, insbesondere an dem Material, umfasst, der vor dem Ausführen eines folgenden Schrittzyklus ausgeführt wird.

12. Verfahren nach Anspruch 11, **dadurch gekennzeichnet, dass** der Schritt der Kühlung der mindestens einen Falle die folgenden aufeinander folgenden Schritte umfasst:
- einen Schritt der Kühlung des nach dem Desorptionsschritt aus dem Reaktor austretenden Wasserstoffs, der an einem Kühlelement (12) ausgeführt wird,
- einen Schritt des Wärmeaustausches, insbesondere kontaktlos, zwischen dem Wasserstoff, der dem Kühlungsschritt unterzogen wurde, und dem Material der mindestens einen Falle, so dass der Wasserstoff dem Material Wärme entzieht,
- einen Schritt des Abführens der Wärme, die dem Material während des Wärmeaustauschschritts entzogen wurde, aus der mindestens einen Falle, der ausgeführt wird, indem der Wasserstoff, der dem Wärmeaustauschschritt unterzogen wurde, aus der mindestens einen Falle abgeführt wird.

13. Verfahren nach einem der Ansprüche 11 oder 12, **dadurch gekennzeichnet, dass** der Reinigungsschritt alternativ an ersten und zweiten getrennten Fallen (1A, 1B) ausgeführt wird, die synchronisiert arbeiten, so dass der Schritt der Kühlung der ersten Falle (1A) während des von der zweiten Falle (1B) ausgeführten Reinigungsschritts ausgeführt wird und der Schritt der Kühlung der zweiten Falle (1B) während des von der ersten Falle (1A) ausgeführten Reinigungsschritts ausgeführt wird.

14. Anlage zum Speichern und Ausspeichern von Wasserstoff, umfassend einen Hydridbehälter (10), wobei der Hydridbehälter (10) bevorzugt Hydride auf Magnesiumbasis umfasst, wobei der Wasserstoff zu seiner Speicherung in den Hydridbehälter eintritt und zu seiner Ausspeicherung aus dem Hydridbehälter austritt, mindestens einer Falle, (1, 1A, 1B), die die Verunreinigungen filtert, die in dem in den Behälter zu seiner Speicherung eintretenden Wasserstoff enthalten sind, und/oder Software- und/oder Hardwaremittel, die ein Verfahren nach einem der vorhergehenden Ansprüche umsetzen, darunter eine Vorrichtung, die gewährleistet, dass die Regeneration der mindestens einen Falle die Wärme nutzt, die von dem nach seiner Ausspeicherung aus dem Behälter austretenden Wasserstoff mitgeführt wird.

15. Anlage nach Anspruch 14, **dadurch gekennzeichnet, dass** die mindestens eine Falle ein Material (2) umfasst, das geeignet ist, die Verunreinigungen, die in dem Wasserstoff enthalten sind, vor seiner Speicherung in dem Behälter reversibel zurückzuhalten, und dass die Vorrichtung ein Wärmeaustauschelement (4) umfasst, das einen Wärmeaustausch, insbesondere kontaktlos, zwischen dem gesamten oder einem Teil des aus dem Behälter austretenden Wasserstoffgesamtstroms (FT) und dem Material der Falle gewährleistet.

16. Anlage nach Anspruch 15, **dadurch gekennzeichnet, dass** die Vorrichtung Elemente (3, 5, 6) umfasst, die ein Spülen des Materials durch einen Gasstrom mit einem direkten Kontakt mit dem Material gewährleisten, so dass der Gasstrom Verunreinigungen, die von dem Material zuvor gefiltert und zurückgehalten wurden, aus der Falle austrägt, wobei die Anlage bevorzugt Elemente (13) umfasst, die gewährleisten, dass der Gasstrom aus einer Fraktion (F1) des aus dem Behälter austretenden Wasserstoffgesamtstroms (FT) besteht.

## Claims

1. Process for storing and destocking hydrogen in a hydride tank (10), comprising a purification step performed on at least one trap (1, 1A, 1B) that filters the impurities contained in the hydrogen entering the tank to be stored, **characterized in that** it comprises a step of regenerating said at least one trap, using the heat carried by the hydrogen exiting the tank after its destocking.

2. Process according to Claim 1, **characterized in that** the regeneration step is stopped after a predefined time of performing the regeneration or when the moisture content of the stream of hydrogen exiting said at least one trap is below a predefined threshold.

3. Process according to either of Claims 1 and 2, **characterized in that** it comprises the cycle of the following successive steps:
- said purification step,
- a step of absorption, by the hydrides of the tank, of the purified hydrogen exiting said at least one trap,
- a step of desorption of the hydrogen by the hydrides of the tank,
- said regeneration step in which the heat carried out of the tank by the hydrogen destocked at the time of the desorption step is used to heat the material (2) of said at least one trap (1) that is capable of reversibly retaining during the purification step the impurities contained in the hydrogen prior to said absorption.

4. Process according to Claim 3, **characterized in that** the regeneration step comprises a step of heat exchange (4), especially contactless, between all or part of the stream of hydrogen which has undergone said desorption and said material of the trap.

5. Process according to either of Claims 3 and 4, **characterized in that** the regeneration step comprises a step of evacuating from the trap the impurities filtered and retained beforehand by said material.

6. Process according to Claim 5, **characterized in that** the regeneration step comprises:
- a step of separation (13) of the total stream (FT) of hydrogen which has undergone said desorption into first and second separate streams (F1, F2),
- a step of using only said first stream (F1) to perform said evacuation step,
- and a step of heat exchange, especially contactless, between only said second stream (F2) and said material such that the heat generated during the desorption step and carried by said second stream is used to heat said material in a manner allowing said evacuation step to be performed by the first stream.

7. Process according to Claim 6, **characterized in that** said step of using only said first stream comprises flushing of said material with said first stream with direct contact with said material.

8. Process according to either of Claims 6 and 7, **characterized in that** it comprises a step of expelling said first stream and the impurities released from said material during said step of evacuating to the external atmosphere (16), performed after said evacuation step and/or **in that** it comprises a step of cooling said first stream and the impurities released from said material during said evacuation step to condense the liquid water, especially performed in a cooling-condenser element (14), followed by a step of mixing between said first cooled stream and said second stream.

9. Process according to Claim 5, **characterized in that** the regeneration step comprises:
- a step of supplying a stream (F3) of neutral gas such as argon or nitrogen, originating from a source of neutral gas (15),
- a step of using said stream of neutral gas to perform said evacuation step,
- and a step of heat exchange, especially contactless, between the total stream of hydrogen that has undergone said desorption and said material so that the heat generated during the desorption step and carried by said total stream is used to heat said material in a manner allowing said evacuation step to be performed.

10. Process according to Claim 9, **characterized in that** said step of using said stream of neutral gas comprises flushing of said material with said stream of neutral gas with direct contact with said material and **in that** it comprises a step of expelling said stream of neutral gas and the impurities released from said material during said step of evacuating to the external atmosphere (16), performed after said evacuation step.

11. Process according to one of Claims 3 to 10, **characterized in that** the cycle of steps comprises, after the regeneration step, a step of cooling said at least one trap, especially on said material, performed before performing a following cycle of steps.

12. Process according to Claim 11, **characterized in that** said step of cooling said at least one trap comprises the following successive steps:
- a step of cooling the hydrogen exiting the reactor after the desorption step, performed on a cooling element (12),
- a step of heat exchange, especially contactless, between the hydrogen which has undergone said cooling step and said material of said at least one trap, so that the hydrogen takes heat from said material,
- a step of evacuating from said at least one trap heat taken from said material during said step of heat exchange, performed by evacuating from said at least one trap the hydrogen that has undergone said step of heat exchange.

13. Process according to either of Claims 11 and 12, **characterized in that** said purification step is performed alternately on first and second different traps (1A, 1B) operating synchronously such that the step of cooling the first trap (1A) is performed during the purification step performed by the second trap (1B) and such that the step of cooling the second trap (1B) is performed during the purification step performed by the first trap (1A).

14. Installation for storing and destocking hydrogen comprising a hydride tank (10), the hydride tank (10) comprising magnesium-based hydrides, hydride tank (10) in which hydrogen enters to be stored and exits therefrom to be destocked, at least one trap (1, 1A, 1B) for filtering out the impurities contained in the hydrogen entering the tank to be stored and software and/or material means which perform a process according to any one of the preceding claims, including a device which ensures that the regeneration of said at least one trap uses the heat carried by the hydrogen exiting the tank after it has been destocked.

15. Installation according to Claim 14, **characterized in that** said at least one trap comprises a material (2) that is capable of reversibly retaining the impurities contained in the hydrogen prior to its storage in the tank and **in that** said device comprises a heat exchange element (4) for heat exchange, especially contactless, between all or part of the total stream (FT) of hydrogen exiting the tank and said material of the trap.

16. Installation according to Claim 15, **characterized in that** said device comprises elements (3, 5, 6) for flushing said material with a gaseous stream with direct contact with said material such that said gaseous stream evacuates from the trap impurities filtered and retained beforehand by said material, the installation comprising preferably elements (13) for ensuring that said gaseous stream is constituted by a fraction (F1) of the total stream (FT) of hydrogen exiting the tank.
